(19) Europäisches Patentamt
European Patent Office
Office européen des brevets

(11) EP 2 230 710 B1

(12) **EUROPEAN PATENT SPECIFICATION**

(45) Date of publication and mention of the grant of the patent:
**01.07.2015 Bulletin 2015/27**

(51) Int Cl.:
***H01M 8/04*** *(2006.01)*

(21) Application number: **10156881.4**

(22) Date of filing: **18.03.2010**

# (54) Fuel cell system and method of operating the same

Système de pile à combustible et son procédé de fonctionnement

Brennstoffzellensystem und Betriebsverfahren dafür

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **19.03.2009 KR 20090023631**

(43) Date of publication of application:
**22.09.2010 Bulletin 2010/38**

(73) Proprietor: **Samsung SDI Co., Ltd.**
**Gyeonggi-do (KR)**

(72) Inventors:
- **Park, Jung-Kurn**
**Gyeonggi-do (KR)**
- **Yoon, Seong-Kee**
**Gyeonggi-do (KR)**
- **Na, Young-Seung**
**Gyeonggi-do (KR)**

(74) Representative: **Gulde & Partner**
**Patent- und Rechtsanwaltskanzlei mbB**
**Wallstraße 58/59**
**10179 Berlin (DE)**

(56) References cited:
**EP-A1- 1 901 383**
**WO-A1-2009/008268**
**JP-A- 2006 085 918**
**JP-A- 2008 103 279**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 230 710 B1

## Description

BACKGROUND

Field of the Invention

The following description relates to a fuel cell system and a method of operating the same.

Description of the Related Technology

A fuel cell is a device that produces electrical energy electrochemically by using a fuel (hydrogen or reformed gas) and an oxidizing agent (oxygen or air), and is also a device in which the fuel (hydrogen or reformed gas) and the oxidizing agent (oxygen or air) are continuously supplied to thereby convert them directly into electrical energy. Pure oxygen or air enriched with oxygen is used as the oxidizing agent of the fuel cell, and pure hydrogen or a fuel enriched with hydrogen generated from a reformed hydrocarbon fuel (LNG, LPG or CH3OH) is used as the fuel. Such fuel cells can be broadly classified into polymer electrolyte membrane fuel cells (PEMFC), direct oxidation membrane fuel cells and direct methanol fuel cells (DMFC).

The polymer electrolyte membrane fuel cell includes a fuel cell body, also called a stack, which generates electrical energy through an electrochemical reaction of hydrogen gas supplied from a reformer and air supplied through operation of an air pump or fan. The reformer functions as a fuel processor that reforms a fuel to generate hydrogen gas and supplies the hydrogen gas to the stack.

The direct oxidation fuel cell is directly supplied with an alcohol-based fuel, and generates electrical energy from electrochemical reaction of hydrogen, included in the fuel, and air, supplied separately without using hydrogen gas, unlike the polymer electrolyte membrane fuel cell. The direct methanol fuel cell refers to a cell among the direct oxidation fuel cells that uses methanol as a fuel.

For convenience of explanation, the following description will be given of the direct methanol fuel cell among these fuel cells. In a fuel cell system, it is very important to supply a uniform amount of fuel. For example, in a 20W direct methanol fuel cell system a change of 0.03cc/min in flow rate generates approximately 10% difference in fuel efficiency. Such a flow rate change causes changes in operating conditions, such as an operation concentration, an operation temperature and an operation pressure, thereby degrading the stability of the fuel cell stack and shortening the life span thereof.

One of the most common methods for the fine control of flow rate is to use a precision flow meter and a high-precision pump. While a precision flow meter for measuring large flow rates is commercially available, a precision flow meter for measuring small flow rates is expensive and has difficulty in measuring correct flow rates because the high-precision flow meter is significantly affected by temperature, pressure and pulsations of the pump.

Moreover, the high-precision pump has difficulty in precisely supplying fuel because it is significantly affected by a change in pressure. Changes in operating pressure occur due to various causes, such as a change in the remaining amount of a fuel cartridge, a change in system operating direction or a change in the moving pressure of a fuel. Accordingly, it is difficult to precisely control a flow rate by using the high-precision pump under the circumstance in which it is difficult to avoid changes in operating pressure.

In addition, in the case of using a low-flow high-precision pump, when piping of a liquid pump fills with gas, it is difficult to perform self-priming for drawing a liquid. This is because the low-flow high-precision pump is designed to operate at a low operating pressure. If a negative pressure is applied due to the gas filled in the piping, fuel supply may be stopped.

Further, there is a problem that the low-flow high-precision pump requires fine control, such as rpm control, frequency control and PWM control, to supply a precise flow rate, the configuration of a circuit for performing such control becomes complex and faults often occur.

Additionally, the low-flow high-precision pump has low durability since it is weak with respect to the introduction of impurities and the performance is severely degraded when used for a long time. Usually, the low-flow high-precision pump is manufactured to be used in a laboratory, but has the problem of low durability, which makes it impossible to be used in a place where fuel with many impurities is supplied for a long time.

Finally, the low-flow high-precision pump is highly expensive, so that it is not practical to apply the pump to a fuel cell.

The above information disclosed in this Background section is only for enhancement of understanding of the background of the invention and therefore it may contain information unknown to a person of ordinary skill in the art.

The state of the art is represented e.g. by WO 2009/008268, JP 2006 085 918 or JP 2008 103 279.

The invention is defined in claim 1.

SUMMARY OF CERTAIN INVENTIVE ASPECTS

In one aspect, a fuel cell system is configured to supply a stable flow rate of fuel to the stack. In another aspect, is a method of operating a fuel cell system configured to supply a stable fuel flow rate to the stack. In another aspect, a fuel cell system comprises a fuel cell stack configured to generate electricity by an electrochemical reaction of a fuel and an oxidizing agent, a fuel supply unit configured to supply a fuel to the fuel cell stack, an oxidizing agent supply unit configured to supply an oxidizing agent to the fuel cell stack and a flow rate controller installed between the fuel cell stack and the fuel supply unit, the flow rate controller comprising a feed pump for pressurizing the fuel, a first resistor in fluid communication with a front end of the feed pump and configured to reduce flow rate, and a second resistor in fluid communication with a rear end of the feed pump and configured to reduce flow rate.

In some embodiments, a smallest cross-sectional area of the first resistor is smaller than a cross-sectional area of a pipe installed on the side of the first resistor. In some embodiments, the smallest cross-sectional area of the second resistor is smaller than the cross-sectional area of a pipe installed on the side of the second resistor. In some embodiments, the first resistor comprises a check valve. In some embodiments, the first resistor is one of a nozzle and a valve. In some embodiments, the second resistor comprises a check valve. In some embodiments, the second resistor is one of a nozzle and a valve. In some embodiments, the feed pump has a rated flow rate that is about 100 to about 800 times higher than a flow rate of the fuel supplied to the fuel cell stack. In some embodiments, when the maximum pressure of the feed pump is $P_{max}$, the maximum flow rate by the feed pump is $R_{max}$, the flow rate to be reduced by the first resistor or check valve and the second resistor or check valve is $R_1$, and the sum of resistance pressures generated in the first resistor or check valve and second resistor or check valve is $P_0$, then $P_0=(R_{max} - R_1)\times P_{max}/R_{max}$. In some embodiments, the fuel cell system further comprises a buffer between the second resistor and the fuel cell stack.

In another aspect, a method of operating a fuel cell system comprises supplying fuel to a fuel cell stack from a fuel supply unit, reducing a fuel flow rate by a first resistor, activating a feed pump, reducing the fuel flow rate by a second resistor and stopping the feed pump.

In some embodiments, when the fuel flow rate after being reduced by the first resistor and the second resistor is $R_1$, an operating time during which the feed pump operates is $t_1$, a stopping time during which the operation of the feed pump is stopped is $t_2$, and a target flow rate supplied to the fuel cell stack is $R_2$, then $R_2=(R_1\times t_1)/ (t_1+t_2)$. In some embodiments, the method further comprises repeatedly activating and stopping the feed pump. In some embodiments, the first resistor is one of a check valve, a nozzle and a valve. In some embodiments, the second resistor is one of a check valve, a nozzle and a valve. In some embodiments, the feed pump is a pump having the fuel flow rate that is about 100 to about 800 times higher than the fuel flow rate of the fuel supplied to the fuel cell stack. In some embodiments, the method further comprises distributing the fuel flow using a buffer installed between the second resistor and the fuel cell stack.

## BRIEF DESCRIPTION OF THE DRAWINGS

Features of the present disclosure will become more fully apparent from the following description and appended claims, taken in conjunction with the accompanying drawings. The disclosure will be described with additional specificity and detail through use of the accompanying drawings. An apparatus according to some of the described embodiments can have several aspects, no single one of which necessarily is solely responsible for the desirable attributes of the apparatus. After considering this discussion, and particularly after reading the section entitled "Detailed Description of Certain Inventive Embodiments" one will understand how illustrated features serve to explain certain principles of the present disclosure.

FIG. 1 is a configuration diagram schematically showing a fuel cell system according to a first exemplary embodiment.

FIG. 2 is an exploded perspective view showing a structure of the fuel cell stack shown in FIG. 1.

FIG. 3 is a configuration diagram showing a flow rate controller of a fuel cell system according to a second exemplary embodiment.

FIG. 4 is a configuration diagram showing a flow rate controller of a fuel cell system according to a third exemplary embodiment.

FIG. 5 is a configuration diagram showing a flow rate controller of a fuel cell system according to a fourth exemplary embodiment.

FIG. 6 is a graph showing the flow rate of fuel introduced into the fuel cell stack of the fuel cell system according to the first exemplary embodiment.

FIG. 7 is a graph showing the flow rate of fuel introduced into the fuel cell stack according to a change in water head in the fuel cell system according to the first exemplary embodiment.

FIG. 8A is a graph showing output and voltage of the fuel cell system according to the first exemplary embodiment.

FIG. 8B is a graph showing a fuel concentration and cell deviation of the fuel cell system according to the first exemplary embodiment.

FIG. 8C is a graph showing an anode outlet temperature of the fuel cell stack according to the first exemplary embodiment.

## DETAILED DESCRIPTION OF CERTAIN INVENTIVE EMBODIMENTS

In the following detailed description, only certain exemplary embodiments have been shown and described, simply by way of illustration. As those skilled in the art would realize, the described embodiments may be modified in various different ways. In addition, when an element is referred to as being "on" another element, it can be directly on the other element or be indirectly on the other element with one or more intervening elements interposed therebetween. Also, when an element is referred to as being "connected to" another element, it can be directly connected to the other element or be indirectly connected to the other element with one or more intervening elements interposed therebetween. Hereinafter, like reference numerals refer to like elements. Hereinafter, certain embodiments will be described in more detail with reference to the accompanying drawings, so that a person having ordinary skill in the art can readily make and use aspects of the present disclosure.

FIG. 1 is a configuration diagram schematically illustrating a fuel cell system according to a first exemplary embodiment. The fuel cell system 100 can employ a direct methanol fuel cell that generates electrical energy by a direct reaction of methanol and oxygen. However, the present disclosure is not limited thereto, and the fuel cell system 100 can be formed as a direct oxidation fuel cell for bringing a liquid or gaseous fuel containing hydrogen, such as ethanol, LPG, LNG, gasoline or butane gas, into reaction with oxygen. In addition, the fuel cell system 100 may be formed as a polymer electrode membrane fuel cell (PEMFC) in which a fuel is reformed to a gas enriched with hydrogen for use. Such fuels used in the fuel cell system 100 are commonly hydrocarbon-based fuels in liquid or gaseous form, such as methanol, ethanol, natural gas, LPG, etc. Also, the present fuel cell system 100 can use oxygen gas stored in a separate storage means or air as an oxidizing agent to be reactive with hydrogen.

The fuel cell system 100 includes a fuel cell stack 30 configured to generate electricity by using a fuel and an oxidizing agent, a fuel supply unit 10 configured to supply a fuel to the fuel cell stack 30, an oxidizing agent supply unit 20 configured to supply an oxidizing agent for electricity generation to the fuel cell stack 30 and a flow rate controller 40 installed between the fuel cell stack 30 and the fuel supply unit 10.

The fuel supply unit 10 is for supplying a fuel to the fuel cell stack 30, and includes a fuel tank 12 that stores liquid fuel and a fuel pump 14 that is connected to the fuel tank 12. The fuel pump 14 may function to discharge the liquid fuel stored in the fuel tank 12 from the fuel tank 12 with a predetermined pumping power. The fuel stored in the fuel supply unit 10 may be methanol.

The oxidizing agent supply unit 20 is connected to the fuel cell stack 30, and includes an oxidizing pump 21 configured to inhale outside air with a predetermined pumping power and supply the air to the fuel cell stack 30.

FIG. 2 is an exploded perspective view showing a structure of the fuel cell stack shown in FIG. 1. Referring to FIG. 1 and FIG. 2, the fuel cell stack 30 will be discussed in detail. The present fuel cell stack 30 includes a plurality of electricity generators 35 configured for generating electrical energy by inducing an oxidation/reduction reaction of a fuel and an oxidizing agent. Each of the electricity generators 35 is a unit cell configured to generate electrical energy. Each of the electricity generators 35 may include a membrane electrode assembly (MEA) 31 performing the oxidation and reduction between the fuel and the oxygen in the oxidizing agent and separators 32 and 33 (also referred to as bipolar plates in the art) configured to supply the fuel and the oxidizing agent to the membrane electrode assembly 31.

In each of the electricity generators 35, the separators 32 and 33 may be disposed at respective sides of the membrane electrode assembly 31 with the membrane electrode assembly 31 interposed therebetween. The membrane electrode assembly 31 may include an electrolyte membrane disposed at the center, a cathode disposed on one side of the electrolyte membrane and an anode disposed on the other side of the electrolyte membrane.

In some embodiments the separators 32 and 33 are disposed close to each other with the membrane electrode assembly 31 interposed therebetween, thereby forming a fuel path and an air path at respective sides of the membrane electrode assembly 31. The fuel path is disposed on the anode side of the membrane electrode assembly 31 and the air path is disposed on the cathode side of the membrane electrode assembly 31. Further, the electrolyte membrane is configured to enable ion exchange in which the hydrogen ions generated in the anode are moved to the cathode and combine with the oxygen in the cathode to thus generate water.

In the anode, the hydrogen is decomposed into electrons and protons (hydrogen ions) through an oxidation reaction. The protons flow to the cathode through the electrolyte membrane, while the electrons that are unable to flow through the electrolyte membrane flow instead to the cathode of the adjacent membrane electrode assembly 31 through the separator 33. The flow of the electrons forms a current. In the cathode, moisture is generated through a reduction reaction of oxygen with the transferred protons and electrons.

In the fuel cell system 100, the fuel cell stack 30 is configured by consecutively disposing the plurality of electricity generators 35 as described above. Herein, end plates 37 and 38 for integrally fastening the fuel cell stack 30 are installed on the outermost sides of the fuel cell stack 30.

A description will be made of an example in which the fuel cell stack 30 is a 20W fuel cell stack 30, which is of a small capacity. The present disclosure, however, is not limited to this example.

The flow rate controller 40 installed between the fuel cell stack 30 and the fuel supply unit 10 includes a feed pump 41, a first resistor in form of a check valve 42 and a second resistor in form of a check valve 43. The feed pump 41 may be a high flow pump. If a target flow rate to be supplied to the fuel cell stack 30 is about 0.4cc/min, the feed pump 41 may be a pump having a rated flow of about 100cc/min. More specifically, the feed pump 41 may have a flow rate that is about 100 to about 800 times higher than the target flow rate. If the feed pump 41 is a high flow pump as described above, a change in operating pressure within a 10kPa range has no significant effect on the feed pump 41 since the feed pump 41 operates over a range of several tens of kPa. Accordingly, fuel can be stably supplied even if the water head changes, and self-priming is possible because the operating pressure is high. Also, the high flow pump has a low failure rate due to its flow rate, and hence, the durability of the system may be improved and manufacturing costs can be reduced.

In addition, the feed pump 41 may be a low-precision pump. Even if the feed pump 41 is a low-precision pump, the first resistor in form of a check valve 42 and the second resistor in form of a check valve 43 decrease the flow rate of the feed pump 41, thereby attaining sufficient precision of flow rates. That is, if it is assumed that the feed pump 41 having a flow rate of about 100cc/min has a flow rate error of about 3%, it can be found that when the flow rate is reduced to about 0.4cc/min, which is about 4/1000 of the flow rate of about 100cc/min, the actual flow rate error is about 0.0012cc/min, which is very small. While it is easy to set an error of about 3% in a pump having a large flow rate, it is very difficult to control an error in a pump having a small flow rate to about 3%.

The first resistor in form of a check valve 42 is installed between the feed pump 41 and the fuel supply unit 10. The first check valve 42 serves as a first resistor configured to reduce the fuel flow rate. In this disclosure, a resistor means a device that increases pressure at the front of the resistor and decreases the flow rate passing through the resistor by reducing a cross-sectional area of a flow path.

The smallest cross-sectional area through which fuel flows in the first check valve 42 is smaller than the cross-sectional area of a pipe installed at the inlet of the first check valve 42. As a consequence, a resistance pressure is generated while fuel passes through the first check valve 42, so that the first check valve 42 is firstly able to reduce the flow rate and dampen a change of the pressure transferred from the fuel supply unit 10. Changes in pressure are transferred to the feed pump 41 according to a change in water head depending on the height of the fuel tank 12, a change in pressure depending on the pulsation of the fuel pump 14, and so forth. The first check valve 42 dampens such changes.

The second resistor in form or a check valve 43 is installed between the feed pump 41 and the fuel cell stack 30. The second check valve 43 serves as a second resistor configured to reduce the fuel flow rate. The smallest cross-sectional area through which fuel flows in the second check valve 43 is smaller than the cross-sectional area of a pipe installed at the inlet of the second check valve 43. Accordingly, the second check valve can reduce the flow rate of fuel from the feed pump 41 and reduce a pulsation pressure generated in the feed pump 41.

By reducing flow rates by means of the first check valve 42 and the second check valve 43 as described above, a small amount of fuel can be supplied more precisely to the fuel cell stack 30. Moreover, backflow of fuel can be prevented by applying check valves, and flow rates can be adjusted by setting an appropriate resistance.

When applying the feed pump 41 having a flow rate of about 100cc/min, if the flow rate in the first check valve 42 is reduced by about 1/2 and the flow rate in the second check valve 43 is reduced by about 1/5, the flow rate passing through the second check valve 43 can be reduced to about 10cc/min. In this state, when the operating time is set to 1 second and the non-operating time is set to 24 seconds by controlling the operation of the feed pump 41, about 0.4cc/min of fuel can be supplied to the fuel cell stack 30.

Assuming that the maximum pressure of the feed pump 41 is $P_{max}$, the maximum flow rate by the feed pump 41 is $R_{max}$ and the flow rate to be reduced by the first resistor (e.g. in form of a check valve 42) and the second resistor (e.g. in form of a check valve 43) is $R_1$, the sum $P_0$ of resistance pressures generated in the first resistor (e.g. check valve 42) and second resistor (e.g. check valve 43) may be expressed by the following Formula 1.

$$P_0=( R_{max} - R_1)\times P_{max} / R_{max}$$

Through the above Formula 1, resistance pressures to be generated by the first resistor (e.g. check valve 42) and the second resistor (e.g. check valve 43) may be easily set.

In a case where a large capacity pump is applied without installing the check valves 42 and 43, the operating time of the pump may be too short and the flow rate supplied during the short period of time may be too high, thereby lowering the fuel efficiency. Further, the lifespan of the fuel cell stack may deteriorate due to an ejection pressure of the fuel.

Additionally, the flow rate may be reduced to a certain extent even in a case where one check valve is installed. However, the flow rate discharged from the pump is too high and hence the operating time of the pump is excessively shortened. Consequently, the fuel efficiency may deteriorate, and too much pressure may be applied to the fuel cell stack.

However, as in the present exemplary embodiment, if the flow rate is decreased in two stages by means of two check valves 42 and 43, an appropriate amount of fuel can be supplied to the fuel cell stack 30 by regulating the operating time.

The flow rate controller 40 may further include a buffer 46 installed between the second check valve 43 and the fuel cell stack 30. The buffer 46 may function to dampen a change in flow rate generated between operating time and stop time. The fuel temporarily stored in the buffer 46 is gradually supplied to the fuel cell stack 30 by a pressing force of the feed pump 41.

An operating method of the fuel cell system 100 according to the present exemplary embodiment will be described below.

The operating method of the fuel cell system 10 may include, for example, reducing a flow rate to a first resistor, activating operation of a feed pump 41, reducing the flow rate to a second resistor and stopping the operation of the feed pump 41. Here, the first resistor includes a first check valve 42, and the second resistor includes a second check valve 43. However, the present disclosure is not limited thereto, and the first resistor and the second resistor may include, for example, a nozzle or a valve similar to those described below.

Assuming that the flow rate flowing to the first resistor and the second resistor after being reduced is $R_1$, an activation time for operating the feed pump 41 is $t_1$, a stop time for stopping the operation of the feed pump 41 is $t_2$, and a target flow rate supplied to the fuel cell stack 30 is $R_2$, the relationship between $t_1$ and $t_2$ can be expressed by the following Formula 2.

Formula 2

$$R_2 = (R_1 \times t_1) / (t_1 + t_2)$$

If an operating time and a stopping time are set in this manner, an appropriate amount of fuel can be supplied to the fuel cell stack 30 by repeatedly performing activating and stopping the operation of the feed pump. The fuel ejected during the operating time is slowly supplied to the fuel cell stack 30. This is because the fuel in the fuel cell stack 30 is not rapidly discharged but moves at a constant speed through a small flow path. Accordingly, additionally supplied fuel stands by in the pipe, and then is slowly introduced into the fuel cell stack 30 during the stopping time.

In addition, the operating method of the fuel cell system 100 may further include distributing the flow of the fuel supplied to the fuel cell stack 30 by using the buffer 46. In this step, the fuel is temporarily stored in the buffer 46 and is then slowly supplied to the fuel cell stack 30 during the stopping time. Through this step, the pressure applied to the fuel cell stack 30 by the feed pump 41 can be alleviated and the fuel can be supplied more uniformly to the entire fuel cell stack 30.

FIG. 3 is a configuration diagram showing a flow rate controller of a fuel cell system according to a second exemplary embodiment.

A flow rate controller 50 includes a feed pump 51 installed between a fuel supply unit 10 and a fuel cell stack 30, a first resistor in form of a nozzle 52 and a second resistor in form of a nozzle 53. The first nozzle 52 is installed between the feed pump 51 and the fuel supply unit 10, and serves as a first resistor that reduces the flow rate of fuel. With a change in water head depending on the height of a fuel tank 12, a pressure change depending on the pulsation of the fuel pump 14, and so forth, a change in pressure is transferred to the feed pump 51. The first nozzle 52 dampens such a change. Also, the first nozzle reduces the amount of fuel introduced into the feed pump 51 by firstly reducing the flow rate. The second nozzle 53 is installed between the feed pump 51 and the fuel cell stack 30, and serves as a second resistor that reduces the flow rate of fuel. If the outlets of the nozzles 52 and 53 are set to be smaller, the flow velocity in the nozzles 52 and 53 becomes higher, but the pressure in front of the nozzles 52 and 53 increases and the flow rate passing through the nozzles 52 and 53 decreases.

FIG. 4 is a configuration diagram showing a flow rate controller of a fuel cell system according to a third exemplary embodiment. A flow rate controller 60 includes a feed pump 61 installed between a fuel supply unit 10 and a fuel cell stack 30, a first resistor in form of a valve 62, and a second resistor in form of a valve 63. The first valve 62 is installed between the feed pump 61 and the fuel supply unit 10, and serves as a first resistor that reduces the flow rate of fuel. The second valve 63 is installed between the feed pump 61 and the fuel cell stack 30, and serves as a second resistor that reduces the flow rate of fuel. By adjusting the first valve 62 and the second valve 63, the flow rate of fluid passing through the valves can be easily set. A cross-sectional area of the flow path in the first valve 62 and the second valve 63 is smaller than a cross-sectional area of the pipe installed on the side to which fuel is introduced. Accordingly, the pressure in front of the first valve 62 and the second valve 63 increases and the total flow rate decreases.

FIG. 5 is a configuration diagram showing a flow rate controller of a fuel cell system according to a fourth exemplary embodiment. A flow rate controller 70 includes a feed pump 71 installed between a fuel supply unit 10 and a fuel cell stack 30, a first resistor in form of a check valve 72 installed at the front end of the feed pump 71 and a second resistor in form of a nozzle 73 installed at the rear end of the feed pump 71. The check valve 72 is installed between the feed pump 71 and the fuel supply unit 10, and the nozzle 73 is installed between the feed pump 71 and the fuel cell stack 30. The check valve 72 and the nozzle 73 serve as respective resistors that reduce the flow rate of fuel. The check valve 72 can control the flow rate by adjusting the cross-sectional area of the path through which fuel passes and the nozzle 73 can control the flow rate by forming a small cross-sectional area of the outlet. Therefore, a resistance pressure is generated in the check valve 72 and the nozzle 73 and the flow rate passing through the check valve 72 and the nozzle 73 diminishes.

Although the present exemplary embodiment illustrates a case in which the check valve 72 is installed at the front end of the feed pump 71 and the nozzle 73 is installed at the rear end thereof, the present disclosure is not limited thereto. Accordingly, the nozzle 73 may be installed at the front end of the feed pump 71, and the check valve 72 may be installed at the rear end thereof. Also, the check valve and a typical valve may be applicable together as a resistor, and the nozzle and a typical valve may be applicable together as a resistor.

FIG. 6 is a graph showing the flow rate of fuel introduced into the fuel cell stack of the fuel cell system according to the first exemplary embodiment. The fuel cell system used in this measurement has a capacity of 40W, and its target fuel flow rate is about 0.4cc/min. Referring to FIG. 6, it can be seen that, although there are certain deviations, a nearly uniform amount of fuel is introduced into the fuel cell stack 30. In this manner, flow rates can be controlled with high precision even if a high flow feed pump is applied.

FIG. 7 is a graph showing the flow rate of fuel introduced into the fuel cell stack according to a change in water head in the fuel cell system according to the first exemplary embodiment. The fuel cell system used in this measurement has a capacity of about 40W, and its target fuel flow rate is about 0.22cc/min. As a result of testing the flow rate by comparison when the water head of the fuel tank is about 0cm, about 70cm, and about -70cm, respectively, it can be seen that, as shown in FIG. 7, the fuel is supplied to the fuel cell stack 30 without much variation in the flow rate.

FIG. 8A is a graph showing an output and voltage of the fuel cell system according to the first exemplary embodiment. FIG. 8B is a graph showing a fuel concentration and cell deviation of the fuel cell system according to the first exemplary embodiment. FIG. 8C is a graph showing an anode outlet temperature of the fuel cell stack according to the first exemplary embodiment.

The fuel cell system used in this measurement has a capacity of about 40W, and its target fuel flow rate is about 0.4cc/min. The operating time of the feed pump is about 1 second and the stopping time thereof is about 9.5 seconds.

As shown in FIG. 8A, it can be seen that the voltage and output are unstable at an initial stage of fuel supply but the voltage and output are almost constant after stabilization. The voltage and output are periodically decreased because the supply of air and fuel is adjusted for recovering.

Meanwhile, as shown in FIG. 8B, the cell voltage deviation is also kept almost constant, and the concentration of the fuel is also kept almost constant in spite of a change in water head. A change in operating pressure depending on a change in water head is $\pm$5kpa, and in spite of such a change in operating pressure, the concentration of the fuel is kept very stable at 0.705$\pm$0.038mol. The cell deviation and concentration change periodically increase because of the aforementioned process for recovering.

Meanwhile, as shown in FIG. 8C, when measuring the temperature of unreacted fuel discharged from the anode outlet, the temperature is seen to be kept constant at almost 60°C.

As described above, as a result of evaluating the performance of the fuel cell system according to the first exemplary embodiment, excellent stability can be achieved overall.

It will be appreciated by those skilled in the art that various modifications and changes may be made without departing from the scope of the present disclosure. It will also be appreciated by those of skill in the art that parts included in one embodiment are interchangeable with other embodiments; one or more parts from a depicted embodiment can be included with other depicted embodiments in any combination. For example, any of the various components described herein and/or depicted in the Figures may be combined, interchanged or excluded from other embodiments. With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

## Claims

**1.** A fuel cell system (100), comprising:

> a fuel cell stack (30) configured to generate electricity by an electrochemical reaction of a fuel and an oxidizing agent;
> a fuel supply unit (10) comprising a fuel tank (12) and a fuel pump (14) and being configured to supply a fuel to the fuel cell stack (30);
> an oxidizing agent supply unit (20) configured to supply an oxidizing agent to the fuel cell stack (30); and
> a flow rate controller (40) installed between the fuel cell stack (30) and the fuel supply unit (10)), the flow rate controller (40) comprising a feed pump (41) for pressurizing the fuel, a first resistor in fluid communication with a front end of the feed pump (41) and configured to reduce flow rate, and a second resistor in fluid communication with a rear end of the feed pump (41) and configured to reduce flow rate.

**2.** The fuel cell system (100) of Claim 1, wherein a smallest cross-sectional area of the first resistor is smaller than a cross-sectional area of a pipe installed at the inlet of the first resistor.

**3.** The fuel cell system (100) of Claim 1 or 2, wherein a smallest cross-sectional area of the second resistor is smaller than the cross-sectional area of a pipe installed at the inlet of the second resistor.

**4.** The fuel cell system (100) of one of Claims 1 to 3, wherein the first resistor is one of a check valve, a nozzle or a valve.

**5.** The fuel cell system (100) of one of Claims 1 to 4, wherein the second resistor is one of a check valve, a nozzle or a valve.

6. The fuel cell system (100) of one of Claims 1 to 5, wherein the feed pump (41) has a rated flow rate that is about 100 to about 800 times higher than a flow rate of the fuel supplied to the fuel cell stack (30).

7. The fuel cell system (100) of one of Claims 1 to 6, wherein, when the maximum pressure of the feed pump (41) is $P_{max}$, the maximum flow rate by the feed pump (41) is $R_{max}$, the flow rate to be reduced by the first resistor and the second resistor is $R_1$, and the sum of resistance pressures generated in the first resistor and second resistor is $P_0$, then

$$P_0=(R_{max} - R_1)\times P_{max}/R_{max}.$$

8. The fuel cell system (100) of one of Claims 1 to 7 further comprising a buffer (46) between the second resistor and the fuel cell stack (30).

9. A method of operating a fuel cell system (100) of one of claims 1 to 8, comprising:

supplying fuel to a fuel cell stack (30) from a fuel supply unit (10);
reducing a fuel flow rate by a first resistor;
activating a feed pump (41);
reducing the fuel flow rate by a second resistor; and
stopping the feed pump (41).

10. The method of Claim 9, wherein, when the fuel flow rate after being reduced by the first resistor and the second resistor is $R_1$, an operating time during which the feed pump (41) operates is $t_1$, a stopping time during which the operation of the feed pump (41) is stopped is $t_2$, and a target flow rate supplied to the fuel cell stack (30) is $R_2$, then

$$R_2=(R_1\times t_1)/(t_1+t_2).$$

11. The method of Claim 9 or 10 further comprising repeatedly activating and stopping the feed pump (41).

12. The method of one of Claims 9 to 11, wherein the first resistor is one of a check valve, a nozzle and a valve.

13. The method of one of Claims 9 to 12, wherein the second resistor is one of a check valve, a nozzle and a valve.

14. The method of one of Claims 9 to 13, wherein the feed pump (41) is a pump having the fuel flow rate that is about 100 to about 800 times higher than the fuel flow rate of the fuel supplied to the fuel cell stack (30).

15. The method of one of Claims 9 to 14 further comprising distributing the fuel flow using a buffer (46) installed between the second resistor and the fuel cell stack (30).

**Patentansprüche**

1. Brennstoffzellensystem (100), aufweisend:

einen Brennstoffzellenstapel (30), der konfiguriert ist, um durch eine elektrochemische Reaktion eines Brennstoffs und eines Oxidationsmittels Elektrizität zu erzeugen;
eine Brennstoffzufuhreinheit (10), die einen Brennstoffbehälter (12) und eine Brennstoffpumpe (14) aufweist und konfiguriert ist, um dem Brennstoffzellenstapel (30) einen Brennstoff zuzuführen;
eine Oxidationsmittel-Zufuhreinheit (20), die konfiguriert ist, um dem Brennstoffzellenstapel (30) ein Oxidationsmittel zuzuführen; und
eine Durchflussmengensteuervorrichtung (40), die zwischen dem Brennstoffzellenstapel (30) und der Brennstoffzufuhreinheit (10) montiert ist, wobei die Durchflussmengensteuervorrichtung (40) eine Zuführungspumpe (41) zum Beaufschlagen des Brennstoffs mit Druck, einen ersten Widerstand, der in Fluidverbindung mit einem vorderen Ende der Zuführungspumpe (41) steht und konfiguriert ist, um die Durchflussmenge zu reduzieren, und einen zweiten Widerstand, der in Fluidverbindung mit einem hinteren Ende der Zuführungspumpe (41) steht und konfiguriert ist, um die Durchflussmenge zu verringern, aufweist.

2. Brennstoffzellensystem (100) nach Anspruch 1, wobei eine kleinste Querschnittsfläche des ersten Widerstands kleiner ist als eine Querschnittsfläche eines Rohrs, das am Einlass des ersten Widerstands montiert ist.

3. Brennstoffzellensystem (100) nach Anspruch 1 oder 2, wobei eine kleinste Querschnittsfläche des ersten Widerstands kleiner ist als die Querschnittsfläche eines Rohrs, das am Einlass des zweiten Widerstands montiert ist.

4. Brennstoffzellensystem (100) nach einem der Ansprüche 1 bis 3, wobei der erste Widerstand ein Rückschlagventil oder eine Düse oder ein Ventil ist.

5. Brennstoffzellensystem (100) nach einem der Ansprüche 1 bis 4, wobei der zweite Widerstand ein Rückschlagventil oder eine Düse oder ein Ventil ist.

**6.** Brennstoffzellensystem (100) nach einem der Ansprüche 1 bis 5, wobei die Zuführungspumpe (41) eine Nenndurchflussmenge aufweist, die etwa 100 bis etwa 800 mal höher ist als eine Durchflussmenge des dem Brennstoffellenstapels (30) zugeführten Brennstoffs.

**7.** Brennstoffzellensystem (100) nach einem der Ansprüche 1 bis 6, wobei, wenn der Maximaldruck der Zuführungspumpe (41) $P_{max}$ ist, die maximale Durchflussmenge mittels der Zuführungspumpe (41) $R_{max}$ ist, die Durchflussmenge, die vom ersten Widerstand und vom zweiten Widerstand verringert werden soll, $R_1$ ist und die Summe der im ersten Widerstand und im zweiten Widerstand erzeugten Widerstandsdrucke $P_0$ ist, dann:

$$P_0=(R_{max} - R_1)\times P_{max}/R_{max}.$$

**8.** Brennstoffzellensystem (100) nach einem der Ansprüche 1 bis 7, ferner aufweisend einen Puffer (46) zwischen dem zweiten Widerstand und dem Brennstoffzellenstapel (30).

**9.** Verfahren zum Betrieb eines Brennstoffzellensystems (100) nach einem der Ansprüche 1 bis 8, aufweisend:

Zuführen von Brennstoff von einer Brennstoffzufuhreinheit (10) zu einem Brennstoffzellenstapel (30);
Verringern einer Brennstoffdurchflussmenge durch einen ersten Widerstand;
Aktivieren einer Zuführungspumpe (41);
Verringern der Brennstoffdurchflussmenge durch einen zweiten Widerstand; und
Stoppen der Zuführungspumpe (41).

**10.** Verfahren nach Anspruch 9, wobei, wenn die Brennstoffdurchflussmenge nach dem Verringern durch den ersten Widerstand und den zweiten Widerstand $R_1$ ist, eine Betriebszeit, während der die Zuführungspumpe (41) in Betrieb ist, $t_1$ ist, eine Stoppzeit, während der der Betrieb der Zuführungspumpe (41) gestoppt ist, $t_2$ ist und eine dem Brennstoffzellenstapel (30) zugeführte Soll-Durchflussmenge $R_2$ ist, dann:

$$R_2=(R_1\times t_1)/(t_1+t_2).$$

**11.** Verfahren nach Anspruch 9 oder 10, ferner aufweisend das wiederholte Aktivieren und Stoppen der Zuführungspumpe (41).

**12.** Verfahren nach einem der Ansprüche 9 bis 11, wobei der erste Widerstand ein Rückschlagventil oder eine Düse oder ein Ventil ist.

**13.** Verfahren nach einem der Ansprüche 9 bis 12, wobei der zweite Widerstand ein Rückschlagventil oder eine Düse oder ein Ventil ist.

**14.** Verfahren nach einem der Ansprüche 9 bis 13, wobei die Zuführungspumpe (41) eine Pumpe ist, die die Brennstoffdurchflussmenge, die etwa 100 bis etwa 800 mal höher als die Brennstoffdurchflussmenge des dem Brennstoffzellenstapel (30) zugeführten Brennstoffs ist, aufweist.

**15.** Verfahren nach einem der Ansprüche 9 bis 14, ferner aufweisend das Verteilen des Brennstoffstroms mittels eines Puffers (46), der zwischen dem zweiten Widerstand und dem Brennstoffzellenstapel (30) montiert ist.

## Revendications

**1.** Système de pile à combustible (100) comprenant :

un empilement de piles à combustible (30) configuré pour générer de l'électricité par une réaction électrochimique d'un combustible et d'un agent oxydant ;
une unité d'alimentation en combustible (10) comprenant un réservoir de combustible (12) et une pompe de combustible (14) et étant configurée pour amener un combustible à l'empilement de piles à combustible (30) ;
une unité d'alimentation en agent oxydant (20) configurée pour amener un agent oxydant à l'empilement de piles à combustible (30) ; et
un régulateur de débit (40) installé entre l'empilement de piles à combustible (30) et l'unité d'alimentation en combustible (10), le régulateur de débit (40) comprenant une pompe d'alimentation (41) pour mettre le combustible sous pression, une première résistance en communication de fluide avec une extrémité avant de la pompe d'alimentation (41) et configurée pour réduire le débit, et une seconde résistance en communication de fluide avec une extrémité arrière de la pompe d'alimentation (41) et configurée pour réduire le débit.

**2.** Système de pile à combustible (100) selon la revendication 1, dans lequel une plus petite surface en coupe transversale de la première résistance est plus petite qu'une surface en coupe transversale d'un tuyau installé à l'entrée de la première résistance.

**3.** Système de pile à combustible (100) selon la revendication 1 ou 2, dans lequel une plus petite surface en coupe transversale de la seconde résistance est plus petite que la surface en coupe transversale d'un tuyau installé à l'entrée de la seconde résistance.

**4.** Système de pile à combustible (100) selon l'une des revendications 1 à 3, dans lequel la première résistance est l'une parmi un clapet de non-retour, une buse ou une valve.

**5.** Système de pile à combustible (100) selon l'une des revendications 1 à 4, dans lequel la seconde résistance est l'une parmi un clapet de non-retour, une buse ou une valve.

**6.** Système de pile à combustible (100) selon l'une des revendications 1 à 5, dans lequel la pompe d'alimentation (41) a un débit nominal qui est d'environ 100 à environ 800 fois supérieur à un débit du combustible amené à l'empilement de piles à combustible (30).

**7.** Système de pile à combustible (100) selon l'une des revendications 1 à 6, dans lequel, si $P_{max}$ est la pression maximum de la pompe d'alimentation (41), $R_{max}$ est le débit maximum par la pompe d'alimentation (41), $R_1$ est le débit à réduire par la première résistance et la seconde résistance, et $P_0$ est la somme des pressions de résistance générées dans la première résistance et la seconde résistance est, alors

$$P_0 = (R_{max} - R_1) \times P_{max}/R_{max}.$$

**8.** Système de pile à combustible (100) selon l'une des revendications 1 à 7, comprenant en outre un tampon (46) entre la seconde résistance et l'empilement de piles à combustible (30).

**9.** Procédé de fonctionnement d'un système de pile à combustible (100) selon l'une des revendications 1 à 8, comprenant les étapes consistant à :

amener le combustible à un empilement de piles à combustible (30) à partir d'une unité d'alimentation en combustible (10) ;
réduire un débit de combustible par une première résistance ;
activer une pompe d'alimentation (41) ;
réduire le débit de combustible par une seconde résistance ; et
arrêter la pompe d'alimentation (41).

**10.** Procédé selon la revendication 9, dans lequel, si $R_1$ est le débit de combustible après avoir été réduit par la première résistance et la seconde résistance, $t_1$ est un temps d'actionnement pendant lequel la pompe d'alimentation (41) fonctionne, $t_2$ est un temps d'arrêt pendant lequel le fonctionnement de la pompe d'alimentation (41) est arrêté, et $R_2$ est un débit cible fourni à l'empilement de piles à combustible (30), alors

$$R_2 = (R_1 \times t_1)/(t_1 + t_2).$$

**11.** Procédé selon la revendication 9 ou 10, comprenant en outre les étapes consistant à activer et arrêter, de façon répétée, la pompe d'alimentation (41).

**12.** Procédé selon l'une des revendications 9 à 11, dans lequel la première résistance est l'une parmi un clapet de non-retour, une buse et une valve.

**13.** Procédé selon l'une des revendications 9 à 12, dans lequel la seconde résistance est l'une parmi un clapet de non-retour, une buse et une valve.

**14.** Procédé selon l'une des revendications 9 à 13, dans lequel la pompe d'alimentation (41) est une pompe ayant un débit de combustible qui est d'environ 100 à environ 800 fois supérieur au débit de combustible du combustible amené à l'empilement de piles à combustible (30).

**15.** Procédé selon l'une des revendications 9 à 14, comprenant en outre l'étape consistant à distribuer l'écoulement de combustible à l'aide d'un tampon (46) installé entre la seconde résistance et l'empilement de piles à combustible (30).

FIG. 1

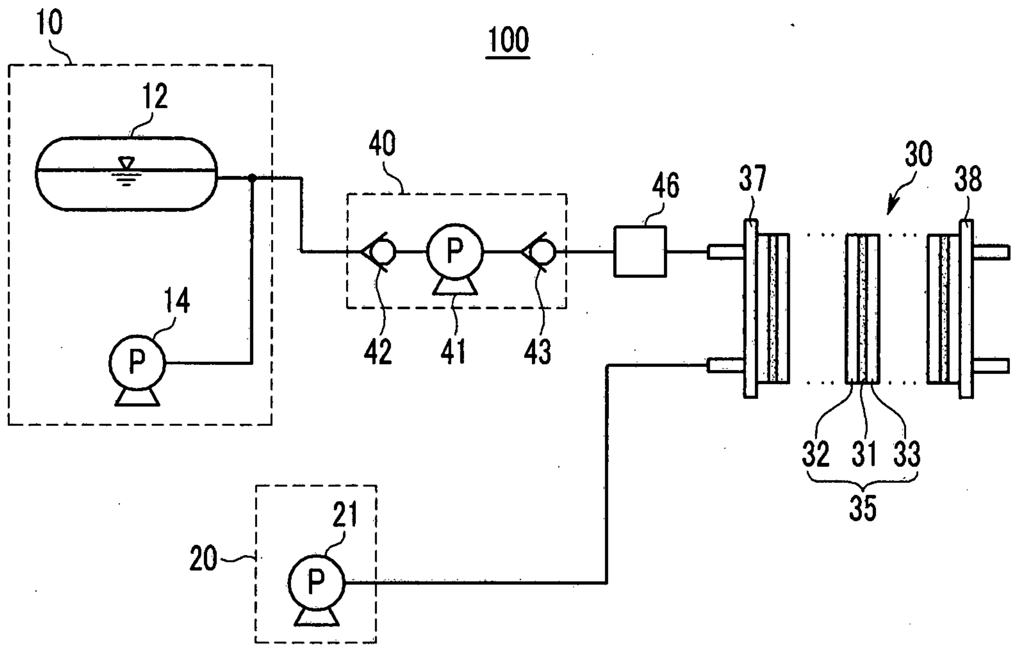

FIG. 2

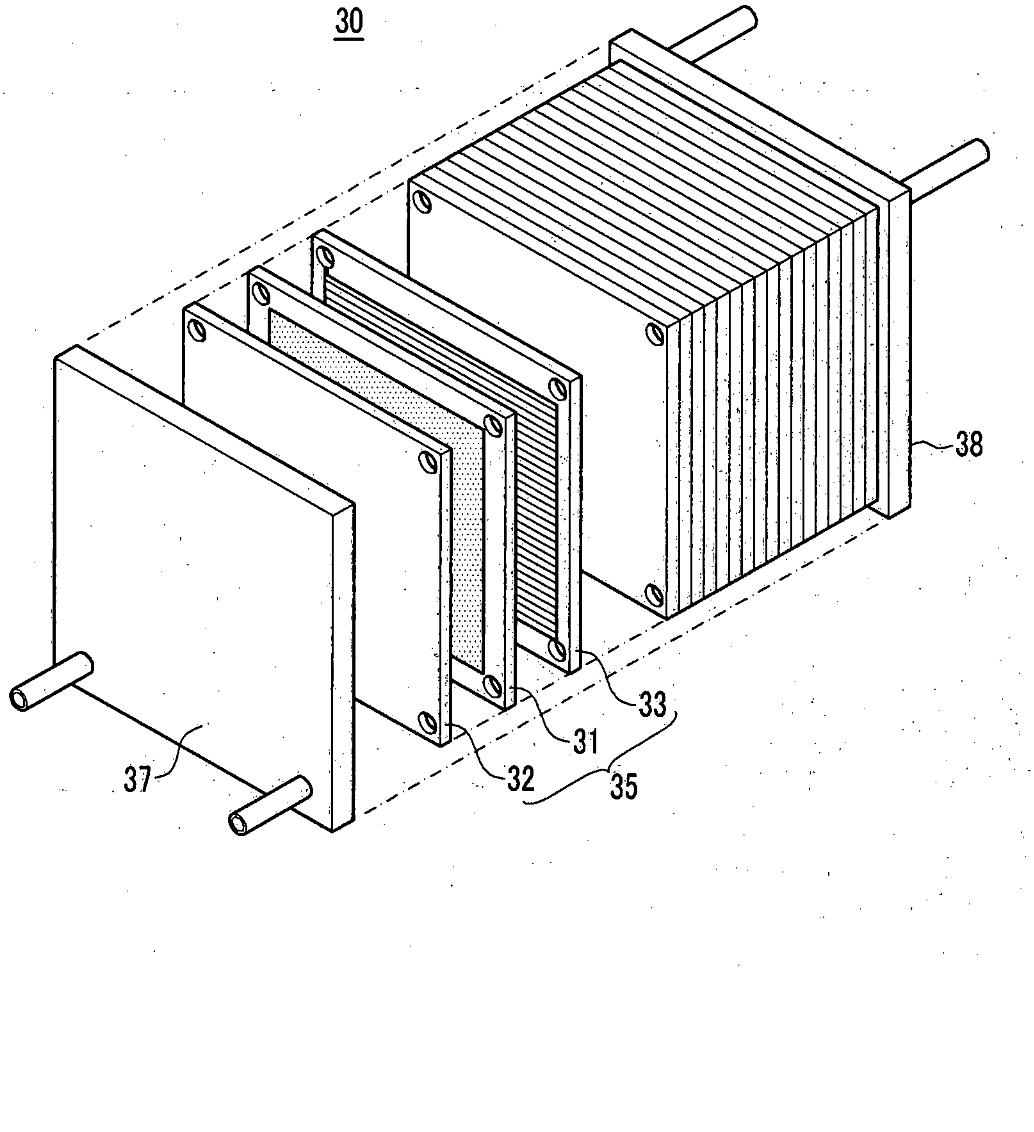

FIG. 3

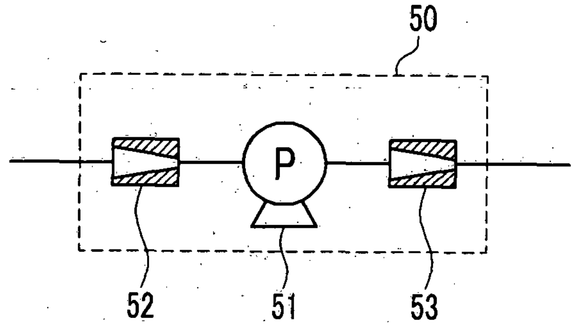


FIG. 4

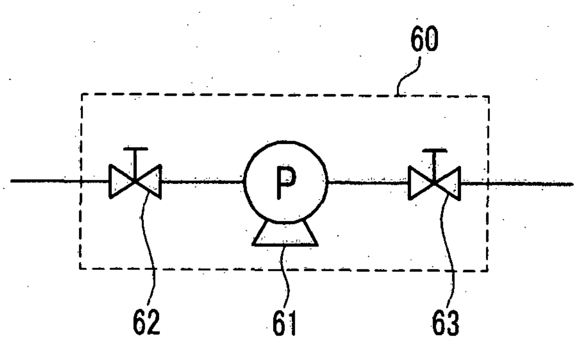

FIG. 5

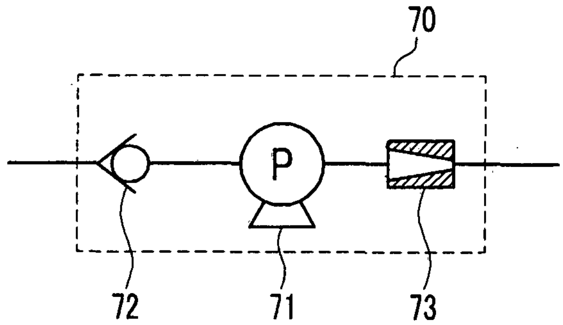

FIG. 6

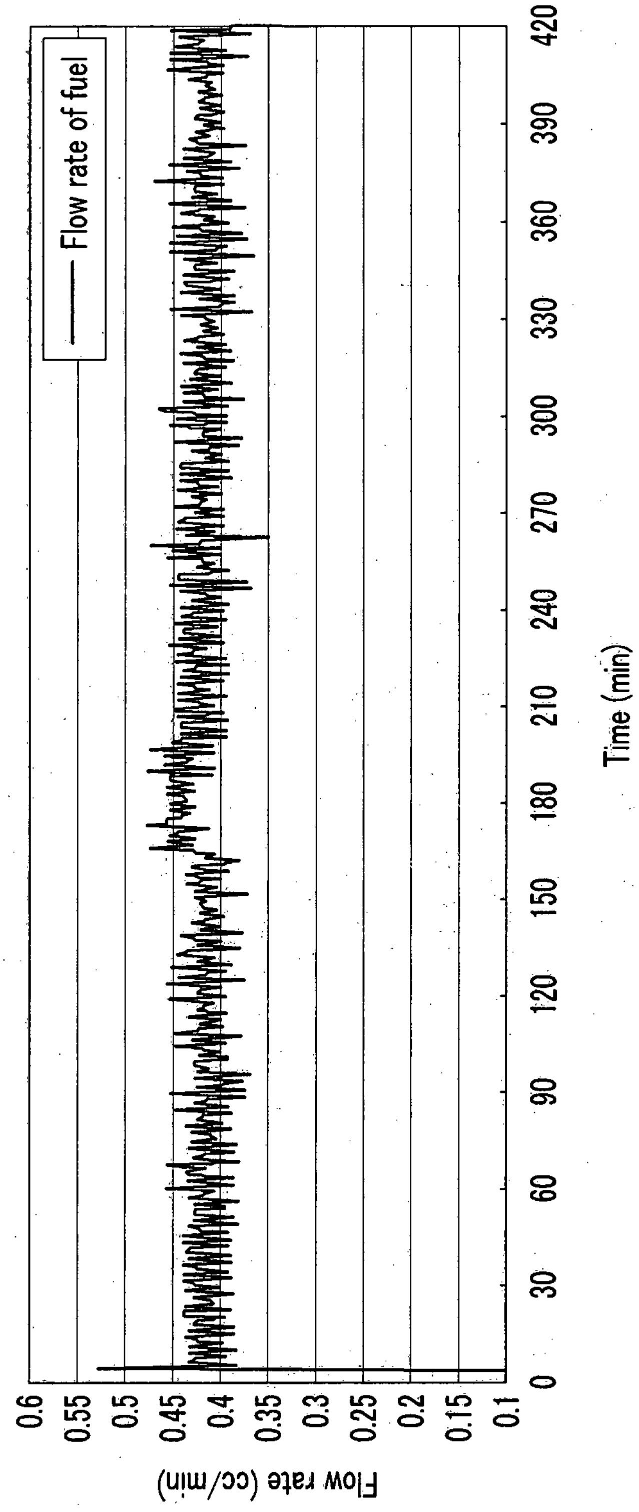
Flow rate of fuel
Flow rate (cc/min)
0.6
0.55
0.5
0.45
0.4
0.35
0.3
0.25
0.2
0.15
0.1
Time (min)
0
30
60
90
120
150
180
210
240
270
300
330
360
390
420

FIG. 7

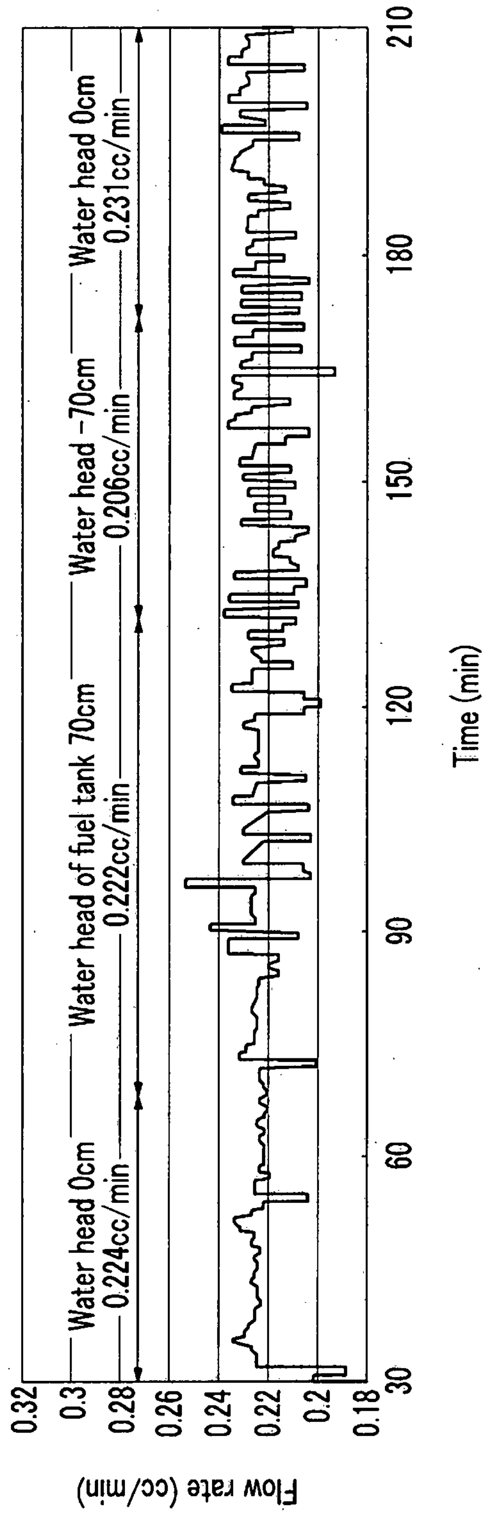
Water head 0cm
0.224cc/min
Water head of fuel tank 70cm
0.222cc/min
Water head -70cm
0.206cc/min
Water head 0cm
0.231cc/min
Flow rate (cc/min)
0.32
0.3
0.28
0.26
0.24
0.22
0.2
0.18
30
60
90
120
150
180
210
Time (min)

FIG. 8A

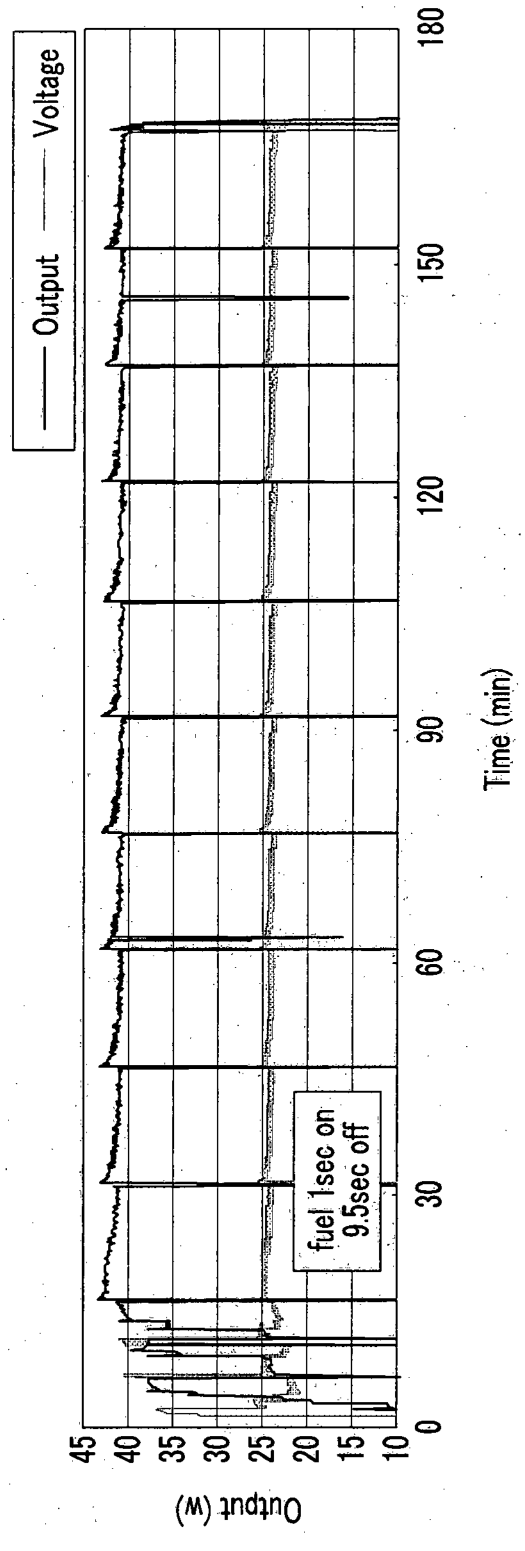
Output
Voltage
fuel 1sec on
9.5sec off
Output (W)
Time (min)
45
40
35
30
25
20
15
10
0
30
60
90
120
150
180

FIG. 8B

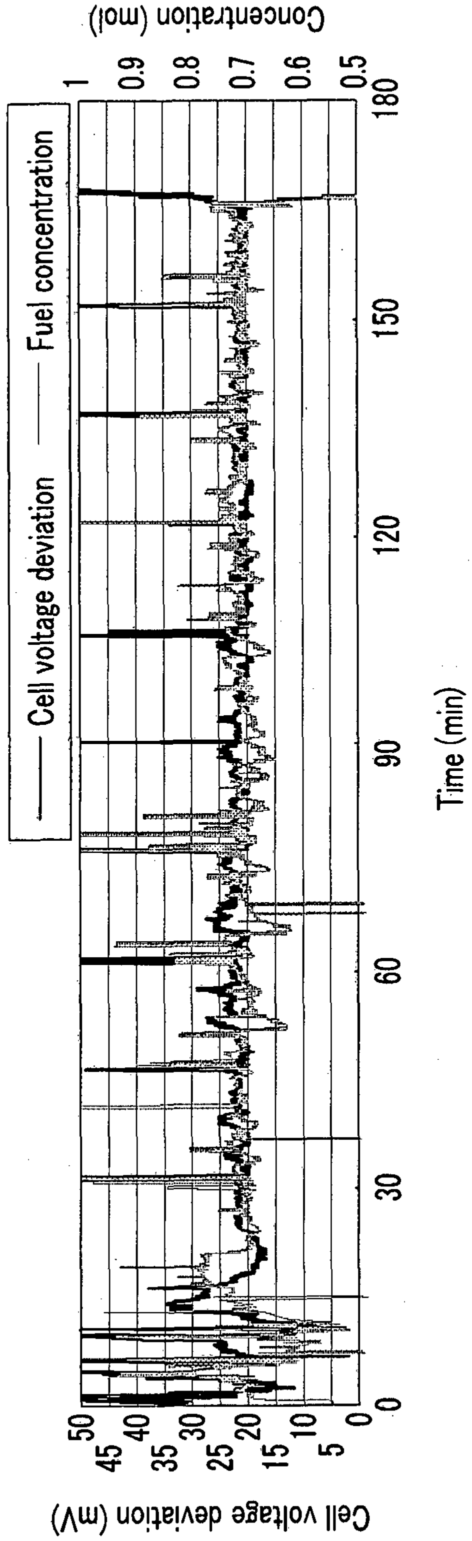

Cell voltage deviation
Fuel concentration
Cell voltage deviation (mV)
50
45
40
35
30
25
20
15
10
5
0
Concentration (mol)
1
0.9
0.8
0.7
0.6
0.5
0
30
60
90
120
150
180
Time (min)

FIG. 8C

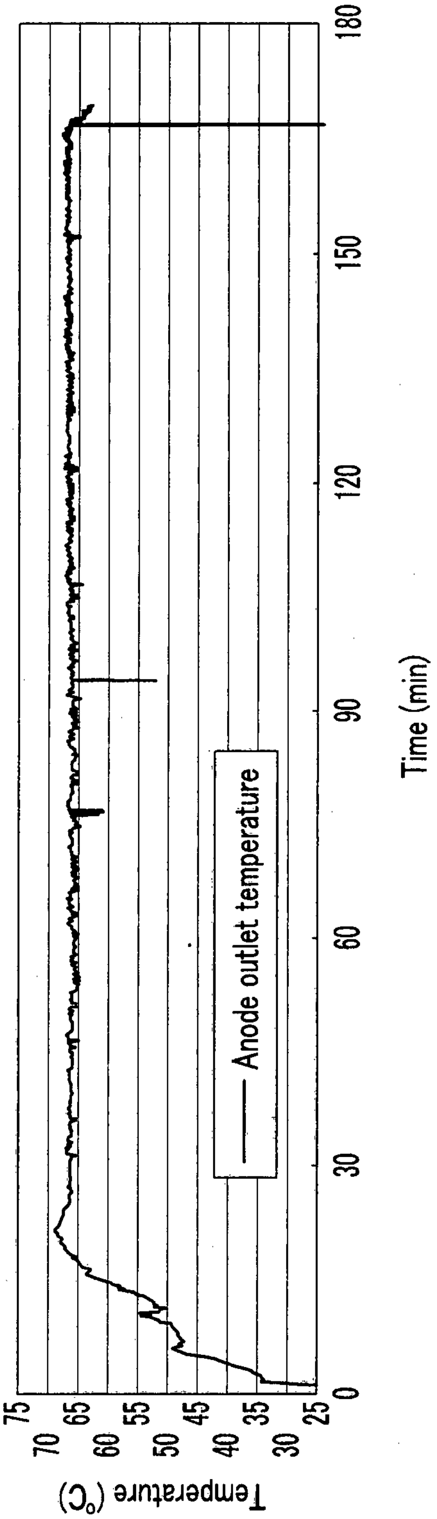
Temperature (°C)
75
70
65
60
55
50
45
40
35
30
25
0
30
60
90
120
150
180
Time (min)
Anode outlet temperature

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2009008268 A
- JP 2006085918 B
- JP 2008103279 B